# EUROPEAN PATENT SPECIFICATION

(11) **EP 2 802 904 B1**
(45) Date of publication and mention of the grant of the patent: **19.07.2023**
(21) Application number: 13736164.8
(22) Date of filing: 14.01.2013
(51) Int. Cl.: G01V 1/00, G01V 1/38

(54) **SIMULTANEOUS SOURCE MARINE SEISMIC ACQUISITION**
MEERESSEISMISCHE ERFASSUNG MIT GLEICHZEITIGER QUELLE
ACQUISITION SISMIQUE MARINE À SOURCES SIMULTANÉES

(30) Priority: 13.01.2012 US 201261586200 P
(43) Date of publication of application: 19.11.2014
(73) Proprietor: Reflection Marine Norge AS, 5160 Laksevåg (NO)
(72) Inventor: JONES, Robert Hughes, Sagamihara-shi, Kanagawa 252-0206 (JP); HALLIDAY, David Fraser, Cambridge Cambridgeshire CB3 0EL (GB); ROBERTSSON, Johan, 8636 Wald ZH (CH)
(74) Representative: Acapo AS
(86) International application number: PCT/IB2013/050332
(87) International publication number: WO 2013/105075

(56) References cited:
- EP-A2- 2 259 091
- GB-A- 2 390 902
- US-A1- 2009 323 469
- US-A1- 2010 142 317
- US-A1- 2011 002 193
- US-A1- 2011 110 188
- US-A1- 2011 158 042
- BERKHOUT A J G: "Changing the mindset in seismic data acquisition", THE LEADING EDGE, SOCIETY OF EXPLORATION GEOPHYSICISTS, US, vol. 27, no. 7, 1 July 2008 (2008-07-01), pages 924-926,928, XP001513544, ISSN: 1070-485X, DOI: 10.1190/1.2954035
- HAMPSON G ET AL: "Acquisition using simultaneous sources", THE LEADING EDGE, SOCIETY OF EXPLORATION GEOPHYSICISTS, US, vol. 27, no. 7, 1 July 2008 (2008-07-01), pages 918-923, XP001513543, ISSN: 1070-485X, DOI: 10.1190/1.2954034

## Description

### BACKGROUND

This disclosure relates to seismic surveys and seismic exploration for oil and gas. In particular, but not by way of limitation, this disclosure relates to methods of using simultaneous source activation techniques in marine seismic surveying to speed up data acquisition.

Seismic exploration involves surveying subterranean geological formations for hydrocarbon deposits. A survey may involve deploying seismic source(s) and seismic sensors at predetermined locations. The seismic sources generate seismic waves, which propagate into geological formations, creating pressure changes and vibrations along the way. Changes in elastic properties of the geological formation scatter the seismic waves, changing the direction of propagation and other properties of the seismic waves. In a seismic survey, part of the energy emitted by the seismic sources reaches the seismic sensors. Some seismic sensors are sensitive to pressure changes (e.g., hydrophones); other seismic sensors are sensitive to particle motion (e.g., geophones). Seismic surveys may deploy one type of sensor or a combination of both types of sensors. In response to the detected seismic events, the seismic sensors generate seismic data, generally, in the form of electrical signals. Analysis of the seismic data may indicate the presence or absence of probable locations of hydrocarbon deposits.

Some seismic surveys are known as "marine" surveys because the survey is conducted in a marine environment. However, "marine" surveys may not only be conducted in saltwater environments; they also may be conducted in fresh water and brackish water environments. In one type of marine survey, called a "towed-array" survey, an array of seismic sensor-containing streamers and sources is towed behind a survey vessel.

Other seismic surveys are known as "land" surveys because the surveys are conducted on land environments. Land surveys may use dynamite, seismic vibrators and/or the like as sources. In land surveys seismic sensors/arrays of seismic sensor-containing cables are laid on the ground to receive seismic signals/waves generated by the seismic sources. The seismic signals may be converted, digitized, stored, or transmitted by sensors to data storage and/or processing facilities nearby, e.g. a recording truck. Land surveys may use wireless receivers to avoid the limitations of cables. Seismic surveys may be conducted in areas between land and sea, which are referred to as "transition zones". Other types of seismic surveys that incorporate both hydrophones and geophones may be conducted on the seabed.

In a conventional towed marine survey using impulsive sources (e.g. an airgun) as a seismic source, a delay is introduced between the firing of one seismic source and the firing of the next seismic source. The delay is selected so as to be of sufficient duration to permit the energy created by the firing of one seismic source to decay to an acceptable level before the energy that is associated with the firing of the next seismic source arrives at the seismic sensors. The use of such delays, however, imposes constraints on the rate at which the seismic data may be acquired. For a towed marine survey, these delays require a minimum inline shot interval because the minimum speed of the survey vessel is limited.

To overcome those limitations, simultaneous source activation methods were recently developed. In the simultaneous source activation methods, the delays between source activations/firings are greatly reduced or practically nonexistent. The use of simultaneous sources may increase the data acquisition speed in the seismic survey, lower the overall cost, and provide many other benefits. In simultaneous source activation methods, the resulting seismic data (seismograms) from simultaneous sources produce overlapping responses due to the use in the seismic survey of different seismic sources that are fired without the delay described above. In order to separate the seismograms from two or more sources activated at proximal times, there needs to be some feature that distinguishes the seismograms. This feature can come from differences in the impulsive seismogram or from differences in the source output signature or both.

If the seismograms differ significantly, they may be separable using knowledge that some parts of the signal space are occupied only by the part of the seismogram that originates from one of the simultaneous sources. For example, as disclosed in U.S. Patent No. 5,924,049, to provide for such a significant difference, the sources may emit similar pulses, but are placed at opposite ends of a seismic streamer so that they are separated by a large physical distance. In such a configuration, the two summed simultaneous seismograms occupy predominantly different parts of the Fk spectrum and can be separated by Fk dip filtering. In this configuration, the source signatures of the two simultaneous sources are not well differentiated, but the seismograms from the two are.

The firing sequence of the sources may be encoded such that they are uncorrelated, as disclosed in USP 7,492,665. The firing sequences are designed such that the autocorrelation tends towards an impulse while the cross-correlation tends to be zero. The responses to each individual source in the group that were fired simultaneously can be separated using correlations.

Another method is shot-time "dithering," where relatively small delays (random delays, for example) are introduced between the firings of seismic sources (i.e., the method involves the use of source dithering). The resulting seismic traces are collected into a domain that includes many firings of each seismic source. The traces are aligned such that time zero corresponds to the firing time for a specific source so that the signal(s) acquired due to the specific seismic source appears coherent while the signal(s) acquired due to the other seismic sources appear incoherent. As such, in the dithering methods, the acquired signals may be separated (related to a seismic source) based on coherency. In a typical seismic marine survey, a shot record may last ten (10) seconds. The average time delay or "dithering" time in a dithering-multi- seismic source marine survey may be in the range of one hundred (100) milliseconds or up to many seconds.

In the context of this disclosure, 'simultaneous' means sufficiently close in time that the reflected seismic signals generated from two shots (or two sources) overlap in time. In some cases, the seismic sources are close to each other and fired at almost the same time. A shot refers to the activation of a seismic source, which source may be a seismic vibrator, an airgun, a watergun and/or the like.

GB2390902 discloses a marine survey using multiple vessels to tow sources that are separated along the survey line, so as to increase coverage for the survey. The sources are successively activated in a sequence, wherein signals from the first source are still being detected when the second source is fired. The time delay between two sequentially activated sources varies from one sequence to the next.

The present invention relates to a method according to claim 1 as well as a marine seismic survey system according to claim 12.

### BRIEF DESCRIPTION OF DRAWINGS

Embodiments of this disclosure are described with reference to the following figures. The same numbers are used throughout the figures to reference like features and components. A better understanding of the methods or apparatuses can be obtained when the following detailed description of the several embodiments is considered in conjunction with the following drawings, in which:
Figure 1 illustrates a seismic acquisition system in a marine environment that may be used in an embodiment of the present invention;
Figures 2A and 2B illustrate shot sequence (Fig. 2A) and shot positions (Fig. 2B) corresponding to a prior art survey method;
Figures 3A, 3B, and 3C illustrate a shot sequence (Fig. 3A) and shot positions (Figs. 3B & 3C), in accordance with an embodiment of the present invention;
Figures 4A and 4B illustrate shot positions before (Fig. 4A) and after regularization (Fig. 4B), in accordance with an embodiment of the present invention;
Figures 5A and 5B illustrate a shot sequence and shot positions, in accordance with an embodiment of the present invention;
Figure 6A illustrates a shot sequence; Figures 6B and 6C illustrate shot positions after data processing, in accordance with an embodiment of the present invention;
Figure 7A illustrates the positions of two sources towed behind a vessel, separated by an offset approximately equal to the desired source spacing in accordance with an embodiment of the present invention; and Figure 7B illustrates the firing sequence for the second source, in accordance with an embodiment of the present invention;
Figure 8 illustrates a flow diagram of a method to speed up data acquisition, in accordance with an embodiment of the present invention;
Figure 9 illustrates a schematic view of a computer system for use in controlling the acquisition of seismic data or processing the data acquired by simultaneous source, in accordance with an embodiment of the present invention; and
Figure 10 illustrates a flow diagram of a method to increase speed of data acquisition, in accordance with an embodiment of the present invention.

### DETAILED DESCRIPTION

Reference will now be made in detail to embodiments, examples of which are illustrated in the accompanying drawings and figures. In the following detailed description, numerous specific details are set forth in order to provide a thorough understanding of the subject matter herein. However, it will be apparent to one of ordinary skill in the art that the subject matter may be practiced without these specific details. In other instances, well-known methods, procedures, components, and systems have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step. The first object or step, and the second object or step, are both objects or steps, respectively, but they are not to be considered the same object or step.

The terminology used in the description of the disclosure herein is for the purpose of describing particular embodiments only and is not intended to be limiting of the subject matter. As used in this description and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention. It being understood that various changes may be made in the function and arrangement of elements without departing from scope of the invention as set forth in the appended claims.

Specific details are given in the following description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments may be described as processes which are depicted as flowcharts, flow diagrams, data flow diagrams, structure diagrams, or block diagrams. Although a flowchart may describe the operations as a sequential process, many of the operations can be performed in parallel or concurrently. In addition, the order of the operations may be re-arranged. A process is terminated when its operations are completed, but it could have additional steps not included in the figure. A process may correspond to a method, a function, a procedure, a subroutine, a subprogram, etc. When a process corresponds to a function, its termination corresponds to a return of the function to the calling function or the main function.

Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as a storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

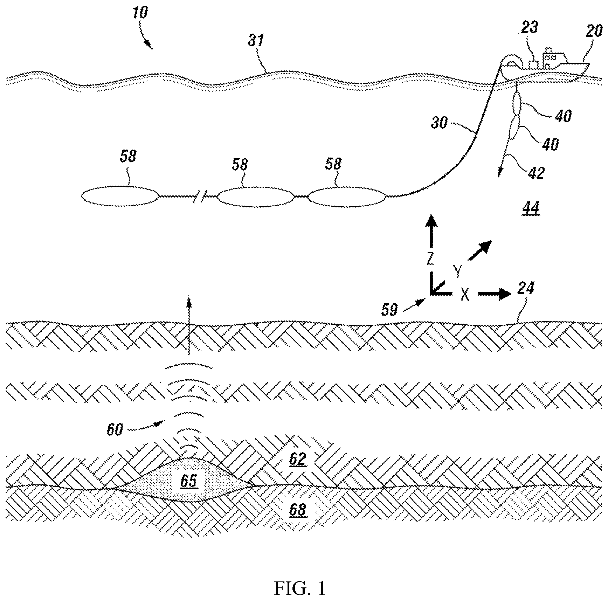

Figure 1 depicts a marine-based seismic data acquisition system 10. In system 10, a survey vessel 20 tows one or more seismic streamers 30 (one streamer 30 being depicted in Figure 1) behind the vessel 20. It is noted that the streamers 30 may be arranged in a spread in which multiple streamers 30 are towed in approximately the same plane and at the same depth. As another non-limiting example, the streamers may be towed at multiple depths, such as in an over/under spread.

The seismic streamers 30 may be several thousand meters long and may contain various support cables (not shown), as well as wiring and/or circuitry (not shown) that may be used to support communication along the streamers 30. In general, each streamer 30 includes a primary cable into which are mounted seismic sensors 58 that record seismic signals. The streamers 30 contain seismic sensors 58, which may be hydrophones to acquire pressure data, geophones to acquire motion data, or multi-component sensors. For example, sensors 58 may be multi-component sensors, with each sensor capable of detecting a pressure wavefield and at least one component of a particle motion that is associated with acoustic signals that are proximate to the sensor. Examples of particle motions include one or more components of a particle displacement, one or more components (inline (x), crossline (y) and vertical (z) components (see axes 59, for example)) of a particle velocity and one or more components of a particle acceleration.

The multi-component seismic sensor may include one or more hydrophones, geophones, particle displacement sensors, particle velocity sensors, accelerometers, pressure gradient sensors, or combinations thereof.

The marine seismic data acquisition system 10 includes one or more seismic sources 40 (two seismic sources 40 being depicted in Figure 1), such as air guns or other sources. The seismic sources 40 may be coupled to, or towed by, the survey vessel 20. The seismic sources 40 may operate independently of the survey vessel 20, in that the sources 40 may be coupled to other vessels or buoys, as just a few examples.

As the seismic streamers 30 are towed behind the survey vessel 20, acoustic signals 42 (an acoustic signal 42 being depicted in Figure 1), often referred to as "shots," are produced by the seismic sources 40 and directed down through a water column 44 into strata 62 and 68 beneath a water bottom surface 24. The acoustic signals 42 are then reflected from the various subterranean geological formations, such as a formation 65 that is depicted in Figure 1.

The incident acoustic signals 42 that are generated by the sources 40 produce corresponding reflected acoustic signals, or pressure waves 60, which are sensed by the seismic sensors 58. It is noted that the pressure waves that are received and sensed by the seismic sensors 58 include "up going" pressure waves that propagate to the sensors 58 without reflection from the air- water boundary 31 , as well as "down going" pressure waves that are produced by reflections of the pressure waves 60 from an air- water boundary 31.

The seismic sensors 58 generate signals (digital signals, for example), called "traces," which indicate the acquired measurements of the pressure wavefield and particle motion. It is noted that while the physical wavefield is continuous in space and time, traces are recorded at discrete points in space which may result in spatial aliasing. The traces are recorded and may be at least partially processed by a signal processor in unit 23 that is deployed on the survey vessel 20, in accordance with some embodiments. For example, a particular seismic sensor 58 may provide a trace, which corresponds to a measure of a pressure wavefield by its hydrophone; and the sensor 58 may provide (depending the sensor configurations) one or more traces that correspond to one or more components of particle motion.

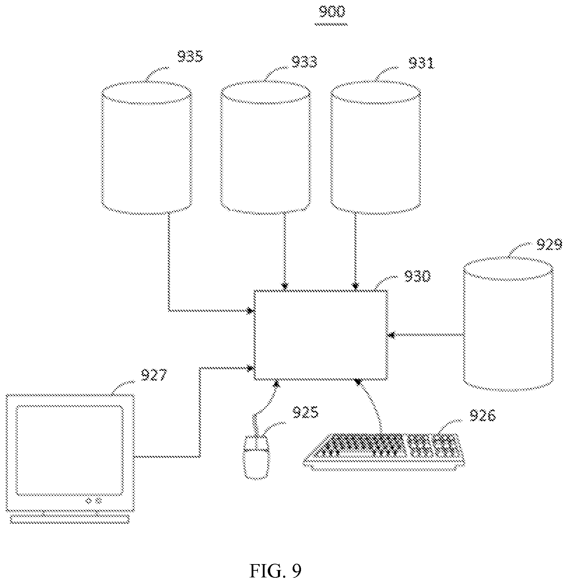

One of the goals of the seismic acquisition is to build up an image of a survey area for purposes of identifying subterranean geological formations, such as the geological formation 65. Subsequent analysis of the representation may reveal probable locations of hydrocarbon deposits in subterranean geological formations. Depending on the particular survey design, portions of the analysis of the representation may be performed on the seismic survey vessel 20, for example, by the signal processor in unit 23. In other surveys, the representation may be processed by a seismic data processing system (such as a seismic data processing system 900 in Figure 9, further described below) that may be, for example, located in an office on land or on the vessel 20.

A particular seismic source 40 may be formed from an array of seismic source elements (such as air guns or marine seismic vibrators, for example) that may be arranged in strings (gun strings, for example) of the array. A particular seismic source 40 may also be formed from one air gun, or from a predetermined number of air guns, of an array, or from multiple arrays, etc. Regardless of the particular composition of the seismic sources, the sources may be fired in a particular time sequence during the survey.

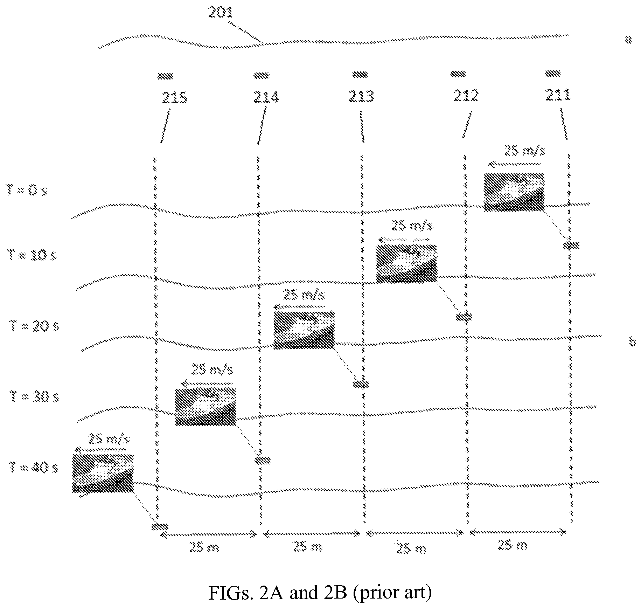

In a typical towed streamer marine seismic survey, an acquisition vessel may have a speed of around 5 knots (2.5 m/s). As shown in Figures 2a and 2b, a seismic source, towed under water surface 201, is fired every 10 seconds or 25 meters, a 25 m per shot spatial sampling interval at positions 211 - 215. This gives a 10 second shot record, i.e., a 10 second interval between shots. The interval of 10 seconds is large enough such that for any given seismic shot record, the residual seismic energy from the preceding shot (i.e., the remaining energy from the previous shot arriving after 10 seconds) can be assumed to be negligible. Thus, the seismic data acquired from shots separated by a 10 second shot interval can be distinguished with no overlap of energy arriving from the previous shot. In this disclosure, this survey design is referred to as a typical marine seismic survey. Its towing speed (2.5m/s) may be referred to as a designed speed; its sampling interval (25 meters) as a designed sampling interval. Embodiments of the present invention may be compared to this baseline survey design. It is noted that the 10 seconds shot record or 25 meters shot spatial sampling intervals are used for illustrative purpose only. The designed shot record or sampling interval for a seismic survey may be greater or less.

In embodiments of the present invention, simultaneous source acquisition is used to allow the speed of seismic acquisition vessels to be increased without compromising the density of the shot points.

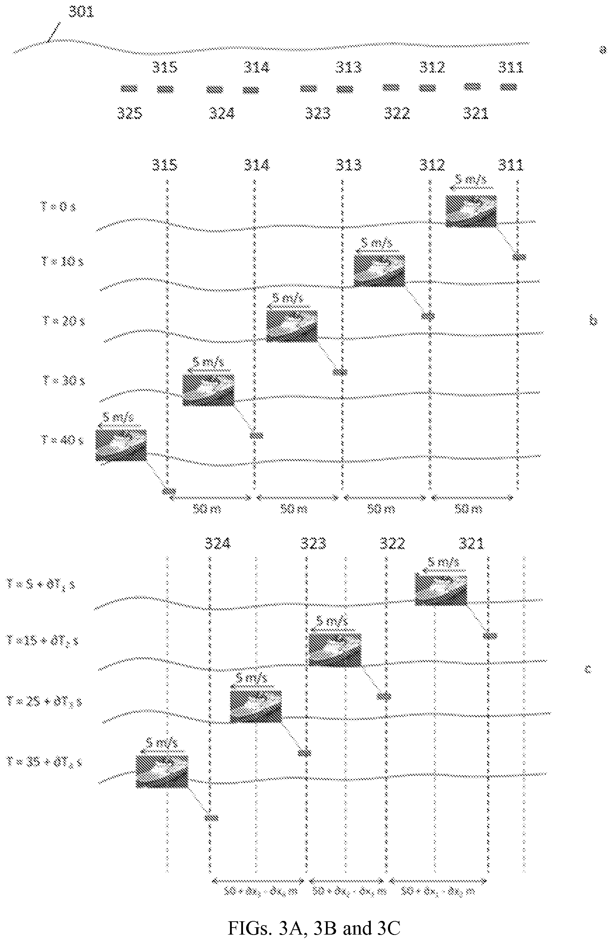

In one embodiment of the present invention, the acquisition vessel towing speed is increased, so the shot point interval is also increased. To decrease the shot point interval back to normal, two or more alternating source sequences are used. Figures 3a, 3b, and 3c illustrate a shot sequence and shot positions corresponding to a firing sequence in accordance with an embodiment of the present invention. Some simultaneous source activation and separation method may be used so that the earth responses corresponding to each shot sequence is separable and obtainable.

Comparing to the example shown in Figure 2, in which the source sampling interval is 25m and the vessel has a speed of 5 knots, in the example shown in Figure 3, the vessel has a speed of 10 knots (5 m/s, i.e., 2x the typical towing speed). In Figure 3a, two firing sequences are shown: 311, 312, 313, 314 and 315 for the first source firing sequence and 321, 322, 323 and 324 for the second. Each of the two sources (311, 312, 313, 314 and 315 for the first source; 321, 322, 323, 324 and 325 for the second source) fires once every 10 seconds, so each may achieve a 50 meter sampling interval, i.e., 2x the typical sampling interval. Figure 3b shows the spatial separation of the source in the first firing sequence and Figure 3c shows the spatial separation of the source in the second firing sequence. The first source firing sequence starts at time 0 seconds and fires every 10 seconds; the second source sequence fires every 10 seconds but starts at time 5 seconds. For each shot sequence, the source sampling interval is 50 m, but the two sequences are separated by 25 m. For example, the first shot in the first sequence 311 and the first shot in the second sequence 321 are separated by 25m. So, when the two sequences in Figure 3 are separated then combined, the 25m source sampling survey is achieved, like the one in Figure 2. In this example, by using two simultaneous sources, the vessel speed can be increased by a factor of two and still acquire the survey.

In this example, the two simultaneous sources need not be two physical sources. They may be one physical source, but fired according to two firing sequences, one corresponding to a first firing sequence and one corresponding to a second firing sequence. The same physical source may be fired once every 5 seconds, rather than every 10 seconds. In other words, the same source is fired twice as frequently as it is in a typical survey. In this example, by using the simultaneous source activation technique, the source towing vessel is traveling at twice the normal speed; the source is firing twice as frequently; the receivers are recording seismic responses as usual; and data of the same quality is acquired. That is, by using this embodiment of the present invention, the same marine seismic survey system can acquire the same quality seismic survey but at twice the speed.

For simplicity and as an illustrative example, a simple "time dithering" method may be used to implement the above embodiment of the present invention. Still referring to Figures 3b and 3c, in which the time dithering method is used, the first source firing sequence (311-315) is conducted as usual: the source is fired every 10 seconds starting at 0 seconds at positions of 0m, 50m, 100m, 150m and 200m etc.

As shown in Figure 3c, the second firing sequence and the source vessel positions are slightly different. Still assuming the 5m/s source vessel speed, the source firing starts at time 5+∂Ti s, so its position is at 25+5∂Ti m. The ∂T is a dithering time used in "time dithering" method of simultaneous source technique. ∂T can be random in a random time dithering method or some designed values in a designed time dithering method, depending on the specifics of the simultaneous source method, which are beyond the scope of this invention. In one simple form of the time dithering method, ∂T is a random value whose average is about Is. Thus, in the second firing sequence, the source is at (50+25+5∂Ti) m, (100+25+5∂T2 ) m, and (150+25+5∂T3 ) m at subsequent 15s, 25s, and 35s. The spatial separation between two adjacent shot points in the second firing sequence is nominally 50 m, varied by the difference in the dithering distances, as shown in Figure 3c.

Using the dithering method, the seismic responses due to the first (311 - 315) and the second (321-324) firing sequence can be separated. In the separated seismic responses, the residual energies due to the other sources are removed by the simultaneous source separation method. Thus, two sets of seismic survey records are obtained, each having the spatial sampling interval of 50 m. The sampling positions between the two sets are separated by 25 m: the first set has data points at 0m, 50m, 100m, 150m and 200m etc.; the second has data points at 25m, 75m, 125m, 175m etc. When the two sets are combined, the resulting one set of data is achieved with data points at 0m, 25m, 50m, 75m, 100m, 125m, 150m, 175m and 200m etc., i.e., with a data sampling interval of 25m. That is the result of a typical survey as in Figure 2.

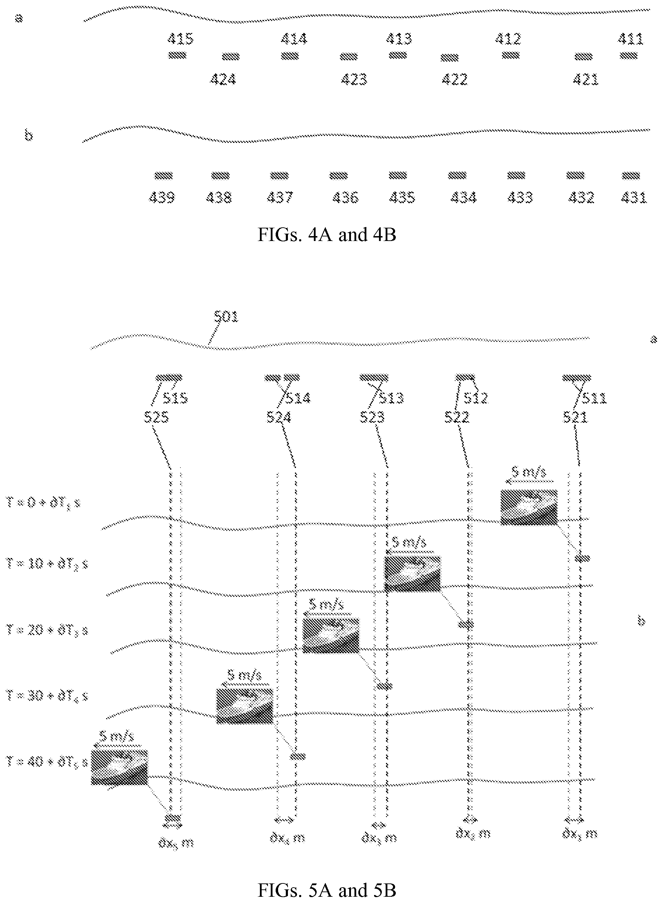

In this example when the time dithering method is used in the second firing sequence, the actual firing times and positions of the second sequence differ from the regular 5s, 15s, 25s or 25m, 75m, 125m etc. by the dithering times or distances. In many surveys, such small irregularities can be tolerated and ignored. If regularity is desirable, the combined dataset can be regularized before it is further processed or used for its intended purposes. Figures 4a and 4b illustrate such a regularization method. Figure 4a shows the shot positions using a method as discussed in Figure 3, in which the shot positions 421-424 that correspond to the second firing sequence differ with the regular positions by small dithering distances. Using a regularization method, the positions of shots 411-415 and 421-424 can be relocated to regular positions 431-439, as shown in Figure 4b. Any regularization methods may be used.

In this example, even though the sources are simultaneous sources, they are not actually fired at the same time. Each shot in the two firing sequences is activated alternatively. There is a finite time, about one-half of the recording time, between the two shots in the two firing sequences.

In this example, only two simultaneous sources are used, so the source vessel travels at only twice the normal speed. If more simultaneous sources are available, the vessel speed can be increased proportionally and other parts of the example adjusted accordingly. If three simultaneous sources are available, the source vessel may travel at three times the normal speed of 7.5 m/s or 75m per 10-second recording period. The three firing sequences may each have the similar 10 seconds interval, but with the starting times staggered at 0s, 3.3s and 6.6s. The three separated datasets from simultaneous source separation may have data points at 0m, 75m, 150m; 25m, 100m, 175m; and 50m, 125m, 200m. However, the final combined dataset will have the same data points at 0, 25m, 50m, 75m, 100m, 125m, 150, 175m and 200m etc.

In some embodiments of the present invention, rather than using alternating source sequences, the two sources may be fired at almost the same time and at the same location. The temporal and spatial separation between the two sources are both small, i.e., the firing of the two sources are close both in time and space. When the separation between two source activation is about or less than 10% of the adjacent shot interval, the two source activation is considered "almost the same" time. When the spatial separation between two sources is about or less than 10% of the shot interval, the two sources are considered co-located, or at the same location. Figure 5a illustrates a firing sequence and Figure 5b illustrates the firing positions of the second firing sequence in accordance with this embodiment of the present invention. The positions of the first firing sequence are simply the evenly spaced sequence at 50m intervals.

In this embodiment, two sources are fired at almost the same time and same location. The first source firing sequence 511- 515 and the second source firing sequence 521-525 are almost overlapping in both time and space. There are small differences in both time and space. After using simultaneous source activation and separation, two almost identical data sets are obtained, with small temporal and spatial differences. In both datasets, the physical source interval (50m) is now twice as large due to the increased (5m/s) towing speed. However, the closely spaced sources (temporally and spatially) provide a finite difference approximation to the source-side in-line gradient. This derived in-line gradient may be used in interpolation of the seismic data to provide the desired shot point interval.

In this example, firing the pairs of sources every 10 seconds (separated by the small dithering times) with a towing speed of 10 knots (5 m/s) gives a source interval of 50m. Subsequent computation of the in-line gradient at each of these positions allows the desired sampling at 25m intervals to be achieved by interpolation. Any interpolation methods may be used, some of which are discussed in J.O.A Robertsson et al, "Full-wavefield, towed-marine seismic acquisition and applications", 74th EAGE Conference & Exhibition, 2012, Z015.

Using the simultaneous source technique, the vessel may travel at twice the typical speed and still obtain a survey dataset at the same sampling interval. Although the immediate goal in this example is to obtain survey data at the regular (e.g. 25m) sampling interval using the available gradients, many interpolation methods can actually achieve better results (e.g. 12.5m, 5m etc.) By using the method in this embodiment, a dataset with smaller sampling intervals may be obtained at the same acquisition cost.

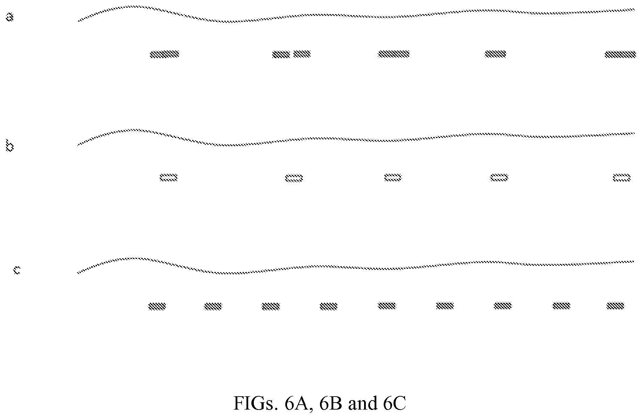

Figures 6a-6c illustrate another embodiment similar to the one shown in Figure 5. Figure 6a shows two firing sequences that are spatially and temporally close. Using simultaneous source technique, two similar data sets can be obtained from simultaneous source separation. From these two similar data sets, one dataset and its source-side gradients can be obtained, as shown in Figure 6b. From this dataset and its source-side gradients, using any interpolation methods, a regularly sampled single source dataset can be obtained as shown in Figure 6c.

In the above example, source-side gradients are used in the subsequent interpolation operation. In some interpolation algorithms, the gradients may not be required. In some interpolation algorithms, only the two datasets are required. The source-side gradients may be implicitly computed inside the algorithm or may be skipped altogether.

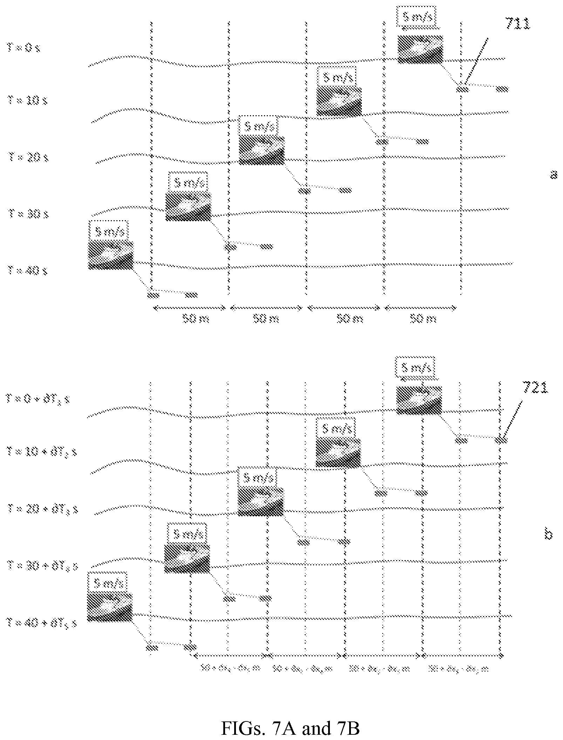

In the example shown in Figures 3a-c, two sources alternate; in the example shown in Figures 5a-b, the two sources fire at the same time (or differ by only a small dithering time, depending on the simultaneous source technique). In some embodiments of the present invention, the alternating source method and the "simultaneous" firing method may be combined. Figures 7a and 7b illustrate the source positions in such an embodiment. Two sources (711 and 721) are towed in a configuration in which the second source 721 is offset by approximately 25m or the desired source separation behind the first source 711 and both sources are fired "simultaneously". When separated, the shot sequence from this configuration has the desired source sampling separation of 25 m. No interpolation is needed in this embodiment.

Among the embodiments described above, they all use the simultaneous source technique and need equipment (e.g. source firing sequence control) or processing (e.g. data separation) related to simultaneous source technique. They all enable the acceleration of towing vessels and seismic data acquisition. Thus, they can all lower the overall cost of marine seismic surveys. However, there are some differences among them.

One difference between the alternating embodiment and the simultaneous embodiments (including the combined alternating/simultaneous embodiment) discussed above is that the sources will overlap at different times. In the alternating embodiments in Figures 3a-c, a strong signal from a given shot (e.g. 321) may overlap a weaker signal from the preceding shot (e.g. 311). After separation, the residuals from a later shot 321 on the preceding shot 311 may be strong relative to the signal of the preceding shot 311. Whereas in the simultaneous and combined embodiments, because the two sources (e.g. 511 and 521, or 711 and 721) are very closely spaced in time, the residuals left after separation may be weaker relative to the signal, since the overlap occurs at times where the signal will be approximately the same strength on both shots.

For the alternating embodiment, besides the equipment or processing related to simultaneous source technique, no additional equipment or processing is needed for achieving increased acquisition speed. For the simultaneous embodiment, additional equipment (a second source) and additional processing (computing gradients and data interpolation) are needed. For combined embodiment, additional equipment (a second source) is needed.

In the above examples, only two sources or source firing sequences are discussed. Of course, more sources or source sequences may be used to further increase the vessel speed and data acquisition speed. If *Nss* (the number of simultaneous source firing sequences) sequences are used, then the source vessel speed may be increased to *Nss* times.

Towed streamer marine seismic surveys are used in the above examples for simplicity only. The embodiments of the present invention can be used in any other seismic survey in the marine environment, such as vertical seismic profiling (VSP) or ocean bottom cables (OBC), in which seismic sources are towed by a vessel and the vessel speed partly determines the data acquisition speed.

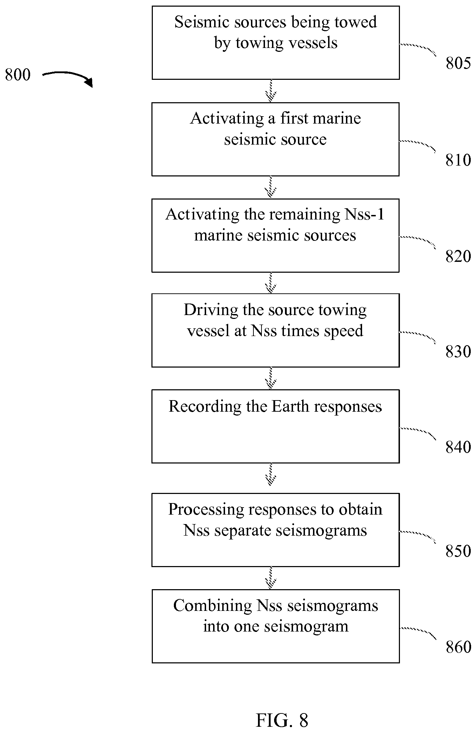

Embodiments of the present invention may provide methods to acquire marine seismic data with simultaneous source activation technique. One such method may be summarized as method 800 in Figure 8, which method provides the following:
- Seismic sources being towed by towing vessels (805);
- Activating a first marine seismic source according to a firing sequence in a simultaneous source technique which includes *Nss* source sequences (810);
- Activating the remaining *Nss*-1 marine seismic sources according to the remaining
   *Nss*-1 firing sequences in the simultaneous source technique, (820);
- Driving the source towing vessel at *Nss* times speed (830);
- Recording the earth responses (840); and
- Processing responses to obtain *Nss* separate seismograms (850)
- Combining *Nss* seismograms into one seismogram having normal sampling intervals (860).

As discussed above, different procedures or methods may be used to carry out the actions summarized in method 800. For example, the sources to be activated according to the firing source sequence may be the same source activated at different times according to the different firing sequence; the sources may be different physical sources, each activated according to different firing sequence.

Method 800 may include other steps, such as the steps to compute source-side gradients and interpolation.

As those with skill in the art will understand, one or more of the steps of methods discussed above may be combined and/or the order of some operations may be changed. Furthermore, some operations in methods may be combined with aspects of other example embodiments disclosed herein, and/or the order of some operations may be changed. The process of measurement, its interpretation, and actions taken by operators may be done in an iterative fashion; this concept is applicable to the methods discussed herein. Finally, portions of methods may be performed by any suitable techniques, including on an automated or semi-automated basis such as on computing system 900 in Figure 9.

Portions of methods described above may be implemented in a computer system 900, one of which is shown in Figure 9. The system computer 930 may be in communication with disk storage devices 929, 931, 933 and 935, which may be external hard disk storage devices and which may be in communication with measurement sensors (not shown). It is contemplated that disk storage devices 929, 931, 933 and 935 are conventional hard disk drives, and as such, may be implemented by way of a local area network or by remote access. While disk storage devices are illustrated as separate devices, a single disk storage device may be used to store any or all of the program instructions, measurement data, and results as desired.

In one implementation, real-time data from the sensors may be stored in disk storage device 931. Various non-real-time data from different sources may be stored in disk storage device 933. The system computer 930 may retrieve the appropriate data from the disk storage devices 931 or 933 to process data according to program instructions that correspond to implementations of various techniques described herein. The program instructions may be written in a computer programming language, such as C++, Java and the like. The program instructions may be stored in a computer-readable medium, such as program disk storage device 935. Such computer-readable media may include computer storage media. Computer storage media may include volatile and non- volatile media, and removable and non-removable media implemented in any method or technology for storage of information, such as computer-readable instructions, data structures, program modules or other data. Computer storage media may further include RAM, ROM, erasable programmable read-only memory (EPROM), electrically erasable programmable read-only memory (EEPROM), flash memory or other solid state memory technology, CD-ROM, digital versatile disks (DVD), or other optical storage, magnetic cassettes, magnetic tape, magnetic disk storage or other magnetic storage devices, or any other medium which can be used to store the desired information and which can be accessed by the system computer 930. Combinations of any of the above may also be included within the scope of computer readable media.

In one implementation, the system computer 930 may present output primarily onto graphics display 927, or via printer 928 (not shown). The system computer 930 may store the results of the methods described above on disk storage 929, for later use and further analysis. The keyboard 926 and the pointing device (e.g., a mouse, trackball, or the like) 925 may be provided with the system computer 930 to enable interactive operation.

The system computer 930 may be located on-site or at a data center remote from the field. The computer system 930 may be connected with other systems via network link 924 (not shown). The system computer 930 may be in communication with equipment on site to receive data of various measurements. Such data, after conventional formatting and other initial processing, may be stored by the system computer 930 as digital data in the disk storage 931 or 933 for subsequent retrieval and processing in the manner described above.

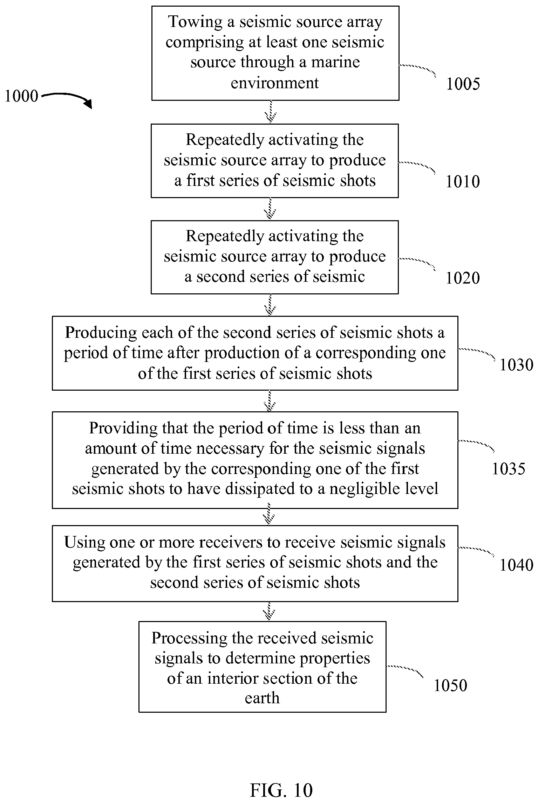

Figure 10 illustrates a flow diagram of a method 1000 to increase the speed of data acquisition in a marine seismic survey in accordance with an embodiment of the present invention.

In step 1005 a seismic source array is towed through a marine environment, such as an ocean, a sea, a lake or the like. The seismic source array comprises one or more seismic sources.

In step 1010 the seismic source array is repeatedly activated to produce a first series of seismic shots. This may involve firing one or more of the seismic sources in the seismic source array.

In step 1020 the seismic source array is repeatedly activated to produce a second series of seismic shots. This may involve firing one or more of the seismic sources in the seismic source array. Alternatively, the seismic source array may comprise two seismic source arrays and seismic sources in either of the seismic source arrays may be fired/activated to produce the first and the second series of seismic shots.

In step 1030, a delay/time separation/period between shots may be provided between shots in the first series of shots and shots in the second series of shots. A such, a shot in the first series of shots may be produced followed by a shot in the second series of shots that is produced after a time delay. As provided in step 1035, in embodiments of the present invention the period between shots in the first sequence of shots and the shots in the second sequence of shots is less than the minimum time necessary for signals/energy generated by the shot in the first period of shots to have dissipated and/or reach a negligible level. Merely, by way of example, the firing of a shot in the second series of shots before the energy generated from a preceding shot in the first series of shots has dissipated means that the energy/signals generated by the two shots overlaps. In general, this is something to avoid in seismic surveying.

In step 1040, receivers are used to receive the signals generated by the first and the second series of shots. Because the time period between the shots in the two sequences is less than the time for energy dissipation from a preceding shot, the receivers receive overlapping signals generated by shots in the first and second series of shots and, as a result, there is interference between the two received signals.

In step 1050, the received seismic signals are processed to determine properties of an interior section of the earth.

In embodiments of the present invention, as discussed above, the period of time between firing shots in the first and the second series of shots is less than in a normal survey because it is less than the time necessary for energy from a preceding shot to have dissipated and become negligible (where negligible energy provides that the overlap between generated energy/signals from a shot and a preceding shot does not produce significant energy/signal overlap and the signals from the different shots can be separated). This reduction in the time period between firing times of the seismic sources means that the seismic source array can be towed at a faster rate through the marine environment and still produce a dense series of shots. For example, a 30 meter or less or a 25 meter or less distance between separated shot may be desirable in a seismic survey to provide adequate resolution in an image of the earth's interior produced by the survey. In embodiments of the present invention this resolution may be produced at towing speeds greater than 2.5 and/or 3 meters per second by decreasing the time period between shots and as a result, increasing overlap between signals generated by the shots and received by the receivers.

In a towed streamer marine seismic survey, the acquisition vessel may have a speed of around 5 knots (2.5 m/s). If a seismic source is fired every 25m, this gives a 10 second shot record. The interval of 10 seconds or more is selected to be large enough, such that for any given seismic shot record, the residual seismic energy from the preceding shot (i.e., the remaining energy arriving at a seismic receiver after 10 seconds) is essentially negligible.

In embodiments of this invention, simultaneous source acquisition, use of two or more seismic source firing sequences and/or distal arrangements of two or more seismic sources in the seismic source array, may be used to allow the speed of seismic acquisition vessels to be increased, without making a compromise on the density of the shot points.

In a first aspect of the present invention, the vessel towing speed is increased and using two or more alternating source sequences the shot point interval is decreased. In such aspects, one of the shot sequences is dithered to allow signals generated by the shots to be separated using a simultaneous source separation algorithm. For example, consider the 25 m source sampling discussed above, if the vessel has a speed of 10 knots (5 m/s) the 25 m source sampling can be achieved by firing one source sequence every 10 seconds (50 metres), starting at time 0 seconds, and a second source sequence every 10 + ***aT*** seconds, starting at time 5 seconds, where ***aT*** is a small dither in the firing time of each shot that permits the use of a simultaneous source separation algorithm.

In the second configuration, rather than using alternating source sequences, the two sources are fired at times separated by only a small timing dither and the two sources are in close spatial proximity to each other. Thus, the physical source interval is now larger due to the increased towing speed, however, after the closely spaced sources have been separated a finite difference approximation to the in-line gradient can be computed from each pair of sources. These in turn allow for interpolation of the seismic data to provide the desired shot point interval. For example, consider the 25 m source sampling again. Firing the pairs of sources every 10 seconds (separated by the small dither), the towing speed of 10 knots (5 m/s) gives a source interval of 50 metres. Subsequent computation of the gradient at each of these positions allows, in accordance with an embodiment of the present invention the desired sampling of 25 m to be achieved.

A third aspect of the present invention comprises a combination of the first two aspects. In such embodiments, two sources are towed in a configuration where the second source is offset by approximately 25 m from the first source. In this embodiment, both sources are fired using a similar timing shift as in the second configuration. When separated, rather than having the two closely spaced sources as in the second configuration, the result would be like that of the first configuration, i.e., the desired source sampling of 25 m.

Although only a few example embodiments have been described in detail above, those skilled in the art will readily appreciate that many modifications are possible in the example embodiments without materially departing from this invention. The scope of the invention is solely defined by the appended claims.

## Claims

1. A method (800, 1000) for conducting a marine seismic survey using a simultaneous source technique having a number (Nss) of simultaneous source firing sequences, wherein the simultaneous source technique is a random time dithering method, or a designed time dithering method, the method for conducting a marine survey comprising:
towing (805, 1005), by a source vessel (20), a seismic source array comprising at least one seismic source (40);
designing a baseline survey having a source vessel designed speed and a designed sampling interval selected so that the delay between shots is large enough such that for any given shot record a residual seismic energy from a preceding shot can be assumed to be negligible;
activating (810, 1010) a first seismic source of the at least one seismic source according to a first firing sequence (311-315, 411-415, 511-515) in the simultaneous source technique;
activating (820, 1020) one or more seismic sources according to the remaining Nss-1 firing sequences (321-324, 421-424, 521-525) in the simultaneous source technique, wherein adjacent firing sequences are activated without a delay of sufficient duration to permit the residual seismic energy from a preceding shot to be assumed to be negligible (1030, 1035);
driving (830) the source vessel at Nss times the designed speed while recording (840,1040) earth responses with overlapping signals; the method further comprising the following computer-implemented steps:
performing separation of the overlapping signals in the recorded earth responses using a separation method based on the simultaneous source firing sequence;
regularizing the separated earth responses;
combining the regularized earth responses from the Nss simultaneous source firing sequences to form a seismic dataset with a sampling interval that is the designed sampling interval; and
providing the combined earth responses for processing (850, 1050) properties of a subterranean section of the earth.

2. The method of claim 1, wherein the marine seismic survey is a towed streamer survey, or a vertical seismic profile (VSP) survey, or an ocean bottom cable (OBC) survey.

3. The method of claim 1,
wherein the at least one source comprises only the first seismic source; and
wherein the activating one or more sources according to the remaining Nss-1 firing sequences in the simultaneous source technique comprises activating the first seismic source according to the remaining Nss-1 firing sequences.

4. The method of claim 3, further comprising:
using (850) a simultaneous source separation technique to separate the recorded responses into Nss separated sets of responses wherein a sampling interval is Nss times the designed sampling interval; and
combining (860) the Nss sets of separated responses into a seismic dataset wherein the sampling interval is the designed sampling interval.

5. The method of claim 1,
wherein the at least one seismic source comprises a number of sources (511, 521; 711, 21) greater than 1 seismic source and less than Nss seismic sources; and
wherein at least one seismic source of the more than one seismic sources is activated according to two of the Nss firing sequences.

6. The method of claim 1,
wherein the at least one seismic source comprises Nss seismic sources; and
wherein the activating one or more sources according to the remaining Nss-1 firing sequences in the simultaneous source technique is to activate the each of the remaining Nss-1 seismic sources according to one of the remaining Nss-1 firing sequences.

7. The method of claim 6,
wherein all shots of at least two different firing sequences among the Nss firing sequences are activated at the same time or at almost the same time.

8. The method of claim 7, further comprising:
using (850) simultaneous source separation to separate recorded responses into N ss sets of seismic data sets; and
interpolating one set of seismic data to the designed sampling intervals or better using two of the Nss sets of seismic data datasets.

9. The method of claim 7, further comprising:
using (850) simultaneous source separation to separate recorded responses into Nss sets of seismic data sets;
computing spatial gradients from the two sets of seismic data of the two different firing sequences, wherein the spatial gradients are spatial differences of adj acent shots in two firing sequences divided by their temporal differences; and
interpolating one set of seismic data to the designed sampling interval or better using the one dataset with spatial gradients.

10. The method of claim 6,
wherein two adjacent sources of the Nss sources are spatially separated by a designed sampling interval; and
wherein all shots of at least two different firing sequences among the Nss firing sequences are activated at the same time or almost the same time.

11. The method of claim 10, further comprising:
using (850) a simultaneous source separation technique to separate recorded responses into Nss separated sets of responses wherein the sampling interval is Nss times the designed sampling interval; and
combining (860) the Nss sets of separated responses into one seismic dataset wherein the sampling interval is the designed sampling interval.

12. A marine seismic survey system comprising:
a vessel (20) towing at least one source (40);
receivers (58) for receiving Earth responses;
a computer processor (23); and
a computer readable storage (935) containing computer executable instructions which when executed by the computer processor, cause the processor to:
perform (850, 1050) a method as in claim 1-3, 5-7 and 10 to acquire seismic data using simultaneous source technique having Nss firing sequences.

## Patentansprüche

1. Verfahren (800, 1000) zum Durchführen einer seismischen Meeresuntersuchung unter Verwendung einer Simultanquellentechnik mit einer Anzahl (Nss) von gleichzeitigen Quellenabfeuerungssequenzen, wobei die Simultanquellentechnik ein Zufallszeitdithering-Verfahren oder ein vorgesehenes Zeitdithering-Verfahren ist, wobei das Verfahren zum Durchführen einer Meeresuntersuchung Folgendes umfasst:
Schleppen (805, 1005) eines seismischen Quellenarrays, das mindestens eine seismische Quelle (40) umfasst, durch ein Quellenschiff (20);
Entwerfen einer Basislinienuntersuchung mit einer für das Quellenschiff vorgesehenen Geschwindigkeit und einem vorgesehenen Abtastintervall, das so gewählt wird, dass die Verzögerung zwischen Schüssen groß genug ist, derart dass für jede gegebene Schussaufzeichnung angenommen werden kann, dass eine restliche seismische Energie von einem vorhergehenden Schuss vernachlässigbar ist;
Aktivieren (810, 1010) einer ersten seismischen Quelle der mindestens einen seismischen Quelle gemäß einer ersten Abfeuerungssequenz (311-315, 411-415, 511-515) nach der Simultanquellentechnik;
Aktivieren (820, 1020) einer oder mehrerer seismischer Quellen gemäß den übrigen Nss-1 Abfeuerungssequenzen (321-324, 421-424, 521-525) in der Simultanquellentechnik, wobei benachbarte Abfeuerungssequenzen ohne eine Verzögerung von ausreichender Dauer aktiviert werden, so dass die verbleibende seismische Energie eines vorangegangenen Schusses als vernachlässigbar angenommen werden kann (1030, 1035);
Steuern (830) des Quellenschiffs mit dem Nss-fachen der vorgesehenen Geschwindigkeit, während Erdantworten mit überlappenden Signalen aufgezeichnet werden (840, 1040); wobei das Verfahren ferner die folgenden computer-implementierte Schritte umfasst:
Durchführen einer Trennung der überlappenden Signale in den aufgezeichneten Erdantworten unter Verwendung eines Trennverfahrens, das auf der gleichzeitigen Abfeuerungssequenz der Quelle basiert;
Regularisieren der getrennten Erdantworten;
Kombinieren der regularisierten Erdantworten aus den Nss simultanen Quellenabfeuerungssequenzen, um einen seismischen Datensatz mit einem Abtastintervall zu bilden, das der vorgesehene Abtastintervall ist; und
Bereitstellen der kombinierten Erdantworten zur Verarbeitung (850, 1050) von Eigenschaften eines unterirdischen Abschnitts der Erde.

2. Verfahren nach Anspruch 1, wobei es sich bei der seismischen Meeresuntersuchung um eine geschleppte Streamer-Untersuchung oder um eine vertikale seismische Profiluntersuchung (VSP) oder eine Meeresbodenkabeluntersuchung (OBC) handelt.

3. Verfahren nach Anspruch 1,
wobei die mindestens eine Quelle nur die erste seismische Quelle umfasst; und
wobei das Aktivieren einer oder mehrerer Quellen gemäß den verbleibenden Nss-1 Abfeuerungssequenzen in der Simultanquellentechnik das Aktivieren der ersten seismischen Quelle gemäß den verbleibenden Nss-1 Abfeuerungssequenzen umfasst.

4. Verfahren nach Anspruch 3, das ferner umfasst:
die Verwendung (850) einer Simultanquellentrennungstechnik, um die aufgezeichneten Antworten in Nss getrennte Sätze von Antworten zu trennen, wobei ein Abtastintervall das Nss-fache des vorgesehenen Abtastintervall ist; und
Kombinieren (860) der Nss Sätze von getrennten Antworten zu einem seismischen Datensatz, wobei das Abtastintervall das vorgesehene Abtastintervall ist.

5. Verfahren nach Anspruch 1,
wobei die mindestens eine seismische Quelle eine Anzahl von Quellen (511, 521; 711, 721) größer als 1 seismische Quelle und kleiner als Nss seismische Quellen umfasst; und
wobei mindestens eine seismische Quelle von der mehr als eine seismische Quelle gemäß zwei der Nss-Abfeuerungssequenzen aktiviert wird.

6. Verfahren nach Anspruch 1,
wobei die mindestens eine seismische Quelle Nss seismische Quellen umfasst; und
wobei das Aktivieren einer oder mehrerer Quellen gemäß den verbleibenden Nss-1 Abfeuerungssequenzen in der Simultanquellentechnik darin besteht, jede der verbleibenden Nss-1 seismischen Quellen gemäß einer der verbleibenden Nss-1 Abfeuerungssequenzen zu aktivieren.

7. Verfahren nach Anspruch 6,
wobei alle Schüsse von mindestens zwei verschiedenen Abfeuerungssequenzen unter den Nss Abfeuerungssequenzen zur gleichen Zeit oder fast zur gleichen Zeit aktiviert werden.

8. Verfahren nach Anspruch 7, ferner umfassend:
Verwenden (850) der Simultanquellentrennung, um aufgezeichnete Antworten in Nss Sätze von seismischen Datensätzen zu trennen; und
Interpolieren eines Satzes seismischer Daten auf die vorgesehenen Abtastintervalle oder besser unter Verwendung von zwei der Nss-Sätze seismischer Datendatensätze.

9. Verfahren nach Anspruch 7, ferner umfassend:
Verwenden (850) der Simultanquellentrennung, um aufgezeichnete Antworten in Nss Sätze von seismischen Datensätzen zu trennen;
Berechnen von räumlichen Gradienten aus den zwei Sätzen seismischer Daten der zwei verschiedenen Abfeuerungssequenzen, wobei die räumlichen Gradienten räumliche Unterschiede von benachbarten Schüssen in zwei Abfeuerungssequenzen geteilt durch ihre zeitlichen Unterschiede sind; und
Interpolieren eines Satzes seismischer Daten auf das vorgesehene Abtastintervall oder besser unter Verwendung des einen Datensatzes mit räumlichen Gradienten.

10. Verfahren nach Anspruch 6,
wobei zwei benachbarte Quellen der Nss Quellen räumlich durch ein vorgesehenes Abtastintervall getrennt sind; und
wobei alle Schüsse von mindestens zwei verschiedenen Abfeuerungssequenzen unter den Nss Abfeuerungssequenzen zur gleichen Zeit oder fast zur gleichen Zeit aktiviert werden.

11. Verfahren nach Anspruch 10, ferner umfassend:
Verwenden (850) einer Simultanquellentrennungstechnik, um aufgezeichnete Antworten in Nss getrennte Sätze von Antworten zu trennen, wobei das Abtastintervall das Nss-fache des vorgesehenen Abtastintervalls beträgt; und
Kombinieren (860) der Nss Sätze von getrennten Antworten zu einem seismischen Datensatz, wobei das Abtastintervall das vorgesehene Abtastintervall ist.

12. System zur meeresseismischen Untersuchung, Folgendes umfassend:
ein Schiff (20), das mindestens eine Quelle (40) schleppt;
Empfänger (58) zum Empfangen von Erdantworten;
einen Computerprozessor (23); und
einen computerlesbaren Speicher (935), der computerausführbare Anweisungen enthält, die, wenn sie von dem Computerprozessor ausgeführt werden, den Prozessor zu Folgendem veranlassen:
Ausführen (850, 1050) eines Verfahrens nach Anspruch 1 bis 3, 5 bis 7 und 10 zur Erfassung seismischer Daten unter Verwendung einer Simultanquellentechnik mit Nss Abfeuerungssequenzen.

## Revendications

1. Procédé (800, 1000) pour réaliser une étude sismique marine en utilisant une technique à sources simultanées présentant un nombre (Nss) de séquences de déclenchement de sources simultanées, dans lequel la technique des sources simultanées est un procédé de juxtaposition à temps aléatoire, ou un procédé de juxtaposition à temps prédéterminé, le procédé permettant de réaliser une étude marine comprenant :
le remorquage (805, 1005) par un vaisseau source (20), d'une série de sources sismiques comprenant au moins une source sismique (40) ;
la conception d'une étude de base présentant une vitesse prévue du vaisseau source et un intervalle d'échantillonnage prévu sélectionné de sorte que le délai entre les tirs soit suffisamment grand de telle manière que pour tout registre de tir donné, une énergie sismique résiduelle provenant d'un tir précédent puisse être supposée négligeable ;
l'activation (810, 1010) d'une première source sismique de la au moins une source sismique selon une première séquence de déclenchement (311-315, 411-415, 511-515) dans la technique des sources simultanées ;
l'activation (820, 1020) d'une ou plusieurs sources sismiques, selon les Nss-1 séquences de déclenchement restantes (321-324, 421-424, 521-525) dans la technique des sources simultanées, dans lequel des séquences de déclenchement adjacentes sont activées sans délai d'une durée suffisante pour permettre à l'énergie sismique résiduelle d'un tir précédent d'être supposée négligeable (1030, 1035) ;
la commande (830) du vaisseau source à Nss fois la vitesse prévue tout en enregistrant (840, 1040) des réponses de la terre avec des signaux qui se chevauchent, le procédé comprenant en outre les étapes suivantes mises en oeuvre par ordinateur :
la réalisation d'une séparation des signaux qui se chevauchent dans les réponses de la terre enregistrées en utilisant un procédé de séparation basé sur la séquence de déclenchement de sources simultanées ;
la régularisation des réponses de la terre séparées ;
la combinaison des réponses de la terre régularisées à partir des Nss séquences de déclenchement de sources simultanées permettant de former un ensemble de données sismiques avec un intervalle d'échantillonnage qui est l'intervalle d'échantillonnage prévu ; et
la fourniture des réponses de la terre combinées pour traiter (850, 1050) des propriétés d'une section souterraine de la terre.

2. Procédé selon la revendication 1, dans lequel l'étude sismique marine est une étude de flûtes sismiques remorquées, ou une étude d'un profil sismique vertical (VSP), ou une étude d'un câble de fond marin (OBC).

3. Procédé selon la revendication 1,
dans lequel l'au moins une source comprend uniquement la première source sismique ; et
dans lequel l'activation d'une ou plusieurs sources selon les Nss-1 séquences de déclenchement restantes dans la technique des sources simultanées comprend l'activation de la première source sismique selon les Nss-1 séquences de déclenchement restantes.

4. Procédé selon la revendication 3, comprenant en outre :
l'utilisation (850) d'une technique de séparation de sources simultanées permettant de séparer les réponses enregistrées en Nss ensembles séparés de réponses, dans lequel un intervalle d'échantillonnage est Nss fois l'intervalle d'échantillonnage prévu ; et
la combinaison (860) des Nss ensembles de réponses séparées en un ensemble de données sismique, dans lequel l'intervalle d'échantillonnage est l'intervalle d'échantillonnage prévu.

5. Procédé selon la revendication 1,
dans lequel l'au moins une source sismique comprend un nombre de sources (511, 521 ; 711, 721) supérieur à 1 source sismique et inférieur à Nss sources sismiques ; et
dans lequel au moins une source sismique des plusieurs sources sismiques est activée selon deux des Nss séquences de déclenchement.

6. Procédé selon la revendication 1,
dans lequel l'au moins une source sismique comprend Nss sources sismiques ; et
dans lequel l'activation d'une ou plusieurs sources selon les Nss-1 séquences de déclenchement restantes dans la technique des sources simultanées consiste à activer chacune des Nss-1 sources sismiques restantes selon une des Nss-1 séquences de déclenchement restantes.

7. Procédé selon la revendication 6,
dans lequel tous les tirs d'au moins deux séquences de déclenchement distinctes parmi les Nss séquences de déclenchement sont activés en même temps ou quasiment en même temps.

8. Procédé selon la revendication 7, comprenant en outre :
l'utilisation (850) de la séparation de sources simultanées pour séparer des réponses enregistrées en Nss ensembles d'ensembles de données sismiques ; et
l'interpolation d'un ensemble de données sismiques aux intervalles d'échantillonnage prévus ou, mieux, en utilisant deux des Nss ensembles d'ensembles de données sismiques.

9. Procédé selon la revendication 7, comprenant en outre :
l'utilisation (850) de la séparation de sources simultanées pour séparer des réponses enregistrées en Nss ensembles d'ensembles de données sismiques ;
le calcul de gradients spatiaux à partir des deux ensembles de données sismiques des deux séquences de déclenchement différentes dans lequel les gradients spatiaux sont des différences spatiales de tirs adjacents dans deux séquences de déclenchement divisées par leurs différences temporelles ; et
l'interpolation d'un ensemble de données sismiques à l'intervalle d'échantillonnage prévu ou, mieux, en utilisant l'ensemble de données avec des gradients spatiaux.

10. Procédé selon la revendication 6,
dans lequel deux sources adjacentes des Nss sources sont séparées dans l'espace par un intervalle d'échantillonnage prévu ; et
dans lequel tous les tirs d'au moins deux séquences de déclenchement différentes parmi les Nss séquences de déclenchement sont activés en même temps ou quasiment en même temps.

11. Procédé selon la revendication 10, comprenant en outre :
l'utilisation (850) d'une technique de séparation de sources simultanées pour séparer des réponses enregistrées en Nss ensembles séparés de réponses, dans lequel l'intervalle d'échantillonnage est Nss fois l'intervalle d'échantillonnage prévu ; et
la combinaison (860) des Nss ensembles de réponses séparées en un ensemble de données sismiques dans lequel l'intervalle d'échantillonnage est l'intervalle d'échantillonnage prévu.

12. Système d'étude sismique marine comprenant :
un vaisseau (20) remorquant au moins une source (40) ;
des récepteurs (58) permettant de recevoir des réponses de la terre ;
un processeur informatique (23) ; et
un support lisible par ordinateur (935) contenant des instructions exécutables par ordinateur qui, lorsqu'elles sont exécutées par le processeur informatique, amènent le processeur à :
exécuter (850, 1050) un procédé selon la revendication 1 à 3, 5 à 7 et 10 pour saisir des données sismiques en utilisant une technique des sources simultanées présentant Nss séquences de déclenchement.
